(19) Europäisches Patentamt
European Patent Office
Office européen des brevets

(11) Veröffentlichungsnummer: **0 504 694 A2**

(12) **EUROPÄISCHE PATENTANMELDUNG**

(21) Anmeldenummer: **92103961.6**

(51) Int. Cl.[5]: **C08G 79/00**

(22) Anmeldetag: **09.03.92**

(30) Priorität: **20.03.91 DE 4109074**

(43) Veröffentlichungstag der Anmeldung:
**23.09.92 Patentblatt 92/39**

(84) Benannte Vertragsstaaten:
**DE FR GB IT**

(71) Anmelder: **BAYER AG**

**W-5090 Leverkusen 1 Bayerwerk(DE)**

(72) Erfinder: **Manners, Ian**
**2142 Margot Street**
**Oakville, Ontario L6H 3M1(CA)**
Erfinder: **Liang, Mong**
**298 Indian Grove**
**Toronto M6P 2H5(CA)**
Erfinder: **Ostrowicki, Andreas, Dr.**
**1520 Venetian Blvd.**
**Pt. Edward, Ontario N7T 7Z8(CA)**

(54) **Thionylphosphazen-Polymere.**

(57) Die neuen Thionylphosphazen-Polymere mit wiederkehrenden Struktureinheiten der Formel

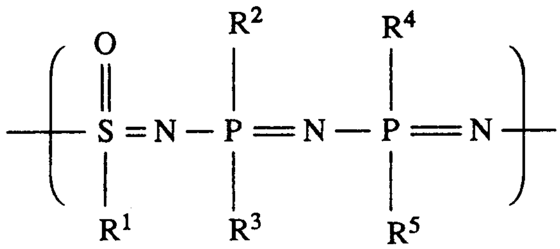

werden hergestellt durch ringöffnende Polymerisierung von Cyclothionylchlorphosphazen der Formel

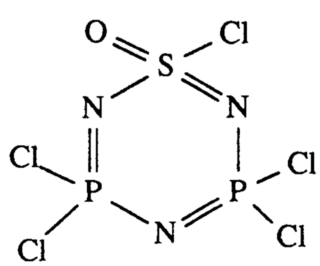

bei Temperaturen von 100 bis 300 °C in Gegenwart eines inerten organischen Lösungsmittels und Umsetzung des so erhaltenen Polymeren der Formel

EP 0 504 694 A2

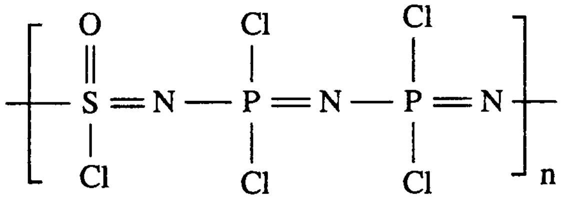

mit Salzen der Formel

$M(R^1-R^5)$

in Gegenwart eines inerten organischen Lösungsmittels bei Temperaturen von 20 bis 200 ° C.

Die neuen Thionylphosphazen-Polymere können zur Herstellung von Thermoplasten oder von Elastomeren und Duromeren verwendet werden.

Die Erfindung betrifft neue Thionylphosphazen-Polymere, ein Verfahren zu deren Herstellung sowie die Verwendung der Thionylphosphazen-Polymere zur Herstellung von Thermoplasten oder von Elastomeren und Duromeren durch Vernetzung.

Phosphazen-Polymere mit verschiedensten Substituenten und daraus hergestellte Thermoplaste, Elastomere und Duromere sind bekannt (siehe z.B. H.R. Allcock, Macromol. Chem., Macromol. Symp. 6 (1986) 101-108).

Polyphosphazene können zu den verschiedensten Formkörpern verarbeitet werden, die sich u.a durch Tieftemperaturflexibilität, Ölbeständigkeit und Schwerentflammbarkeit auszeichnen. Nachteilig bei diesen Polyphosphazen-Elastomeren ist jedoch insbesondere ihre nicht ausreichende Hydroylsebeständigkeit.

Gegenstand der vorliegenden Anmeldung sind neue, lineare oder verzweigte, lösliche Thionylphosphazen-Polymere mit einem mittleren Molekulargewicht $M_n$ von 10.000 bis 3.500.000 (g/Mol) und wiederkehrenden Struktureinheiten der Formel

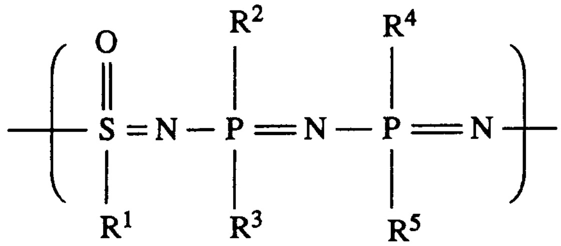

(I),

worin

$R^1$ für Halogen, Pseudohalogen, gegebenenfalls substituiertes $C_1$-$C_{18}$-Alkoxy, $C_5$-$C_8$-Cycloalkoxy, $C_6$-$C_{14}$-Aryloxy, $C_7$-$C_{18}$-Alkaryloxy, $C_2$-$C_{18}$-Alkenoxy, $C_8$-$C_{18}$-Alkenylaryloxy oder einen Siloxanrest steht,

$R^2$ bis $R^5$ gleich oder verschieden sind und gegebenenfalls substituiertes $C_1$-$C_{18}$-Alkoxy, $C_5$-$C_8$-Cycloalkoxy, $C_6$-$C_{14}$-Aryloxy, $C_7$-$C_{18}$-Alkaryloxy, $C_2$-$C_{18}$-Alkenoxy, $C_8$-$C_{18}$-Alkenylaryloxy oder einen Siloxanrest bedeuten,

wobei der Anteil an ungesättigten Substituenten $R^1$ bis $R^5$ bis zu 10 %, bezogen auf die Gesamtzahl an Substituenten $R^1$ bis $R^5$, beträgt.

Als Halogene in der obengenannten Formel seien genannt Fluor, Chlor oder Brom, bevorzugt Fluor oder Chlor; als Pseudohalogene die Cyano-, Thiocyanogruppe; als Alkoxyreste der Methoxy-, Ethoxy-, Propoxy-, Isopropoxy-, Butoxy-, Isobutoxy-, sec.-Butoxy-, Pentyloxy-, Hexyloxy- und Octyloxyrest; als Cycloalkoxyreste der Cyclopentoxy-, Cyclohexyloxy-, Methylcyclopentyloxy-, Methylcyclohexyloxy- und Decahydronaphthoxyrest; als Aryloxyreste der Phenoxy-, 1- oder 2-Naphthoxy-, Anthracenoxy- und Phenanthrenoxyrest; als Alkaryloxyreste der o-, m- oder p-Methylphenoxy-, 2,3-, 2,4-, 2,5-, 2,6-, 3,4- oder 3,5-Dimethylphenoxy-, o-, m- oder p-Ethylphenoxyrest; als Alkenoxyreste der Allyloxy-, 2- oder 3-Butenoxy-, Pentenyloxy-, 3-Methyl-3-buten-1-oxy-, Hexenyloxy-, Octenyloxy-, 9-Octadecenyloxy-, Cyclohexenyloxy- und Octahydronaphthoxyrest; als Alkenylaryloxyreste der o-, m- oder p-Vinylphenoxy- und o-, m- oder p-Allylphenoxyrest.

Als Siloxanreste kommen solche der Formel

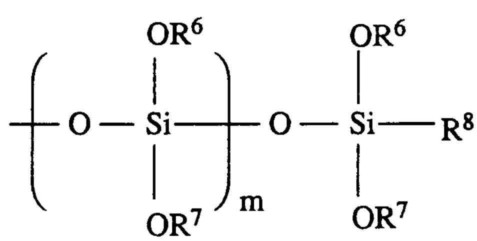

in Frage,

worin

$R^6$ und $R^7$ gleich oder verschieden sind und für $C_1$-$C_8$-Alkyl, $C_2$-$C_8$-Alkenyl oder $C_6$-$C_{14}$-Aryl stehen und

$R^8$ für $OC_1$-$C_8$-Alkyl, $OC_6$-$C_{14}$-Aryl, die Aminogruppe oder die O-Acylgruppe steht und

m für 0 oder ganze Zahlen von 1 bis 10 steht.

Die Reste $R^1$ bis $R^5$ der Formel (I) können substituiert sein durch Halogen, wie Fluor oder Chlor, oder durch $C_1$-$C_4$-Alkylreste, $C_6$-$C_{10}$-Aryl- oder substituierte Arylreste, durch Ester-, Nitro-, Amino-, Cyano- oder Sulfogruppen, Ether- oder Polyetherreste der Formel $R^9$-(O-$R^{10}$)$_n$-O-, worin $R^9$ eine $C_1$-$C_5$-Alkyl-, $C_6$-$C_{10}$-Aryl-, $C_5$-$C_8$-Cycloalkyl-, $C_7$-$C_{18}$-Alkaryl-, $C_7$-$C_{18}$-Aralkylgruppe, $R^{10}$ eine difunktionelle aliphatische $C_1$-$C_4$-Kohlenwasserstoffgruppe und n eine ganze Zahl im Bereich von 1 bis 70 darstellen (weitere Beispiele finden sich in US-PS 4 258 173). Eine Substitution kann dabei ein- oder mehrfach erfolgen, wobei für den Fall einer Substitution durch Halogen eine Mehrfachsubstitution bevorzugt ist.

Bevorzugt werden als Reste $R^1$ bis $R^5$ genannt:
Methoxy, Ethoxy, Propoxy, Isopropoxy, Butoxy, Pentyloxy, Hexyloxy, Octyloxy, 2-Phenylethoxy, Cyclohexyloxy, Decahydronaphthoxy, 2-Chlorethoxy, 2,2-Dichlorethoxy, 2,2,2-Trichlorethoxy, 2,2,2-Trifluorethoxy, 3,3,3-Trifluorpropoxy, 2,2,3,3-Tetrafluorpropoxy, Pentafluorpropoxy, Heptafluorbutoxy, Pentadecafluoroctyloxy, 2-Methoxyethyloxy, 2-Ethoxyethyloxy, 2-Propoxyethyloxy, 2-Butoxyethyloxy, 2-Phenoxyethyloxy, 2-(Methylphenoxy)ethyloxy, 2-(2-Methoxyethoxy)ethyloxy, 2-(2-Ethoxyethoxy)ethyloxy, 2-(2-Butoxyethoxy)-ethyloxy, Phenoxy, p-, m- oder o-Methylphenoxy, o-, m- oder p-Ethylphenoxy, 2,3-, 2,4-, 2,5-, 2,6-, oder 3,4-Dimethylphenoxy, p- oder m-Fluorphenoxy, 2,3-, 2,4-, 2,5-, 2,6-, oder 3,4-Difluor-phenoxy, p- oder m-Chlorphenoxy, 2,3-, 2,4-, 2,5-, 2,6-, oder 3,4-Dichlorphenoxy, p- oder m-Bromphenoxy, 2,3-, 2,4-, 2,5-, 2,6-, oder 3,4-Dibromphenoxy, p- oder m-Trifluormethylphenoxy, p- oder m-Nitrophenoxy, p- oder m-Cyanophenoxy, o-, m- oder p-Methoxyphenoxy, 1- oder 2-Naphthoxy, Allyloxy, 2- oder 3-Butenoxy, 3-Methyl-3-buten-1-oxy, Pentenyloxy, Hexenyloxy, Octenyloxy, 9-Octadecenyloxy, Cyclohexenyloxy, Octahydronaphthoxy, 2-Chlor-2-propenoxy, 3-Chlor-2-propenoxy, 2-Chlor-2-butenoxy, 4-Chlor-2-butenoxy, 2-Chlor-3-butenoxy, 4-Chlor-3-butenoxy, o-, m- oder p-Vinylphenoxy und o-, m- oder p-Allylphenoxy, besonders bevorzugt Methoxy, Ethoxy, Butoxy, Hexyloxy, 2,2,2-Trichlorethoxy, 2,2,2-Trifluorethoxy, 3,3,3-Trifluorpropoxy, 2,2,3,3-Tetrafluorpropoxy, Pentafluorpropoxy, Heptafluorbutoxy, 2-Methoxyethyloxy, 2-Ethoxyethyloxy, 2-(2-Methoxyethoxy)ethyloxy, 2-(2-Ethoxyethoxy)ethyloxy, Phenoxy, p-, oder m-Methylphenoxy, p- oder m-Fluorphenoxy, 2,3-, 2,4-, 2,5-, 2,6-, oder 3,4-Difluorphenoxy, p- oder m-Chlorphenoxy, 2,3-, 2,4-, 2,5-, 2,6-, oder 3,4-Dichlorphenoxy, p- oder m-Bromphenoxy, 2,3-, 2,4-, 2,5-, 2,6-, oder 3,4-Dibromphenoxy, p- oder m-Trifluormethylphenoxy, Allyloxy, 3-Methyl-3-buten-1-oxy, 9-Octadecenyloxy, 2-Chlor-2-propenoxy, 3-Chlor-2-propenoxy, 2-Chlor-2-butenoxy, 4-Chlor-2-butenoxy, 2-Chlor-3-butenoxy und 4-Chlor-3-butenoxy sowie o-Allylphenoxy.

Als Siloxanreste sind bevorzugt solche mit $R^6$ und $R^7$ für Phenyl oder Methyl, $R^8$ für Methyl oder Phenyl und m für 1 bis 10.

In diesem Zusammenhang sei darauf hingewiesen, daß bei Gleichheit der Substituenten $R^1$ bis $R^5$ die Thionylphosphazene Homopolymere darstellen und bei verschiedenen Resten $R^1$ bis $R^5$ diese Thionylphosphazene copolymer sind.

Die physikalischen Eigenschaften der erfindungsgemäßen Thionylphosphazen-Polymerekönnen in einem weiten Bereich modifiziert werden durch Variation der Reste $R^1$ bis $R^5$. Die erfindungsgemäßen Thionylphosphazen-Polymere besitzen daher Glasübergangstemperaturen von -100°C bis +250°C, bevorzugt -60 bis +200°C.

Die mittleren Molekulargewichte $M_n$ der erfindungsgemäßen Thionylphosphazen-Polymere liegen im Bereich von 10.000 bis 3.500.000, vorzugsweise 15.000 bis 2.500.000, ganz besonders bevorzugt im Bereich von 20.000 bis 1.000.000, g/Mol.

Die Thionylphosphazen-Polymere können in üblicher Weise durch entsprechende Vernetzungsagenzien oder durch Bestrahlung zu Elastomeren vernetzt werden. Die Vernetzung kann mit Hilfe von Schwefel oder schwefelspendenden Verbindungen, wie Dithiocarbamaten, z.B. Kupfer-N,N-dimethyl-, Zink-N,N-dimethyl-, Tellur-N,N-diethyl-, Cadmium-N,N-dicyclohexyl-, Blei-N,N-dimethyl-, Selen-N,N-dibutyl-, Zink-N-pentamethylen-, Zink-N,N-diethyl- und Zink-N-isopropyl-N-octyldithiocarbamat, oder Thioharnstoffen, z.B. Zinkethylxanthogenat, Natriumisopropylxanthogenat, Dixanthogendibutylester, Kaliumisopropylxanthogenat, Zinkbutylxanthogenat, oder Thiazolen, z.B. 2-Mercaptobenzthiazol, Zinksalz des 2-Mercaptobenzthiazols, 2-Benzothiazolyl-N,N-diethylthiocarbamylsulfid, Dibenzothiazyldisulfid, oder Imidazolen, z.B. 2-Mercaptoimidazolin, 2-Mercapto-4,4,6-trimethyldihydropyrimidin, oder Sulfenamiden, wie N-tert.-Butyl-2-benzothiazolyl-, N-Cyclohexylbenzothiazolyl-, N,N-Diisopropylbenzothiazolyl-, N-(2,6-Dimethylmorpholino)-2-benzothiazolyl-, N,N-Diethylbenzothiazolylsulfenamid, oder Thiuramdisulfiden, wie N,N'-Diethyl-, Tetrabutyl-, N,N'-Dicyclohexyl und Tetramethylthiuramdisulfid, oder durch Peroxide, wie aromatische oder aliphatische Diacylperoxide, Dicarbonsäurediperoxide, Ketonperoxide, Alkylperoxyester, Alkylhydroperoxide durchgeführt weden. Als Beispiele seien genannt Diacetyl-, Dibenzoyl-, Di(2,4-dichlorbenzoyl)-, Di-tert.-Butyl-, Dicumylperoxid, tert.-Butylperbenzoat, tert.-Butylcumylperoxid, 2,5-Bis(tert.-butylperoxy)-2,5-dimethylhexan, 2,5-Bis(tert.-butylperoxy)-2,5-dimethyl-3-hexin, 4,4,4',4'-Tetra(tert.-butylperoxy)-2,2-dicyclohexylpropan, 1,4-Bis(tert.-

butylperoxy-isopropyl)benzol, 1,1-Bis-(tert.-butylperoxy)-3,3,5-trimethylcyclohexan, Lauroylperoxid, Cyclohexanonperoxid, tert.-Butylperacetat, Butylhydroperoxid. Zur Vernetzung geeignet sind auch andere radikalspendende Reagenzien, wie Azide, geeignet. Als Beispiel sei Tetramethylenbis(azidformiat) genannt (weitere Beispiele finden sich in US 3 284 421).

Bei der Vernetzung mit radikalerzeugenden Reagenzien ist häufig der Einsatz von Coagenzien, die eine mehrfache Unsättigung aufweisen, empfehlenswert. Als Beispiele hierfür seien Triallylcyanurat, N,N'-m-Phenylendimaleinimid oder Trimethylolpropantrimethacrylat erwännt. Auch sind bei halogenhaltigen Thionylphosphazen-Polymeren der Formel (I) Metalloxide, wie Zinkoxid, Magnesiumoxid, Bleioxid, zur Vernetzung der erfindungsgemäßen Polymere geeignet.

Die Vernetzungsreaktion kann auch mit phenolischen Härtungssystemen durchgeführt werden.

Grundbestandteile solcher Härtersysteme sind phenolische Harze, die mittels Kondensation substituierter oder nichtsubstituierter Phenole in einem alkalischen Medium, oder durch Kondensation bifunktioneller Phenoldialkohole hergestellt werden.

Phenolische Härtersysteme, die phenolisches Harz, Metallverbindungen und gegebenenfalls einen Halogenspender enthalten, sind besonders empfehlenswert (Details hierzu finden sich z.B.in US 3 287 440 und US 3 709 840). Normalerweise benötigen halogenierte, vorzugsweise bromierte phenolische Harze, die 2 bis 10 Gew.-% Brom enthalten, keinen Halogenspender, sondern werden zusammen mit einem Wasserstoffhalogenid-Akzeptor verwendet, so z.B. mit Eisenoxid, Titanoxid, Magnesiumoxid, Magnesiumsilicat, Siliciumdioxid oder vorzugsweise Zinkoxid. Die Gegenwart dieser Verbindungen fördert die Vernetzungsfunktion des phenolischen Harzes.

Die Vernetzung der erfindungsgemäßen Thionylphosphazen-Polymere kann auch mit halogenfreien oder halogenhaltigen Harzsystemen und Metalloxiden oder organischen Säuren, wie z.B. Stearinsäure in Kombination mit Metalloxiden, bevorzugterweise mit halogenfreien Harzsystemen unter gleichzeitiger Verwendung eines Halogenspenders und Zinkoxid oder mit halogenhaltigen Harzen und Zinkoxid erfolgen.

Die Herstellung von halogenierten Phenolharzen und ihre Verwendung in einem Härtersystem mit Zinkoxid ist in US 2 972 600 und US 3 093 613 beschrieben. Auf diese Beschreibungen sowie auf die beiden oben erwähnten Patentschriften wird hiermit Bezug genommen. Geeignete Halogenspender sind beispielsweise Zinn(II)chlorid, Eisen(III)chlorid, oder halogenierte Polymere, wie chloriertes Paraffin, chloriertes Polyethylen, sulfochloriertes Paraffin und Polychlorbutadien. Nähere Angaben zu phenolischen Härtersystemen finden sich in Hoffman, Vulcanization and Vulcanizing Agents, New York, 1967.

Die effektivsten Vernetzungsagenzien können leicht durch Vorversuche ermittelt werden und hängen u.a. von den Substituenten $R^1$ bis $R^5$ ab. Die Vernetzung (Vulkanisation) kann wie erwähnt in bekannter Weise und mit den üblichen Vernetzungsagenzien erfolgen. Beschrieben sind solche Verfahren und Agenzien beispielsweise in Vulcanization of Elastomers, I.J. Sjothun (Ed.) New York, 1964, Seiten 126 bis 152 und 153 bis 194, Vulcanisation und Vulcanisation Agents, W. Hoffman, New York, 1967 sowie in Rubber Compounding, F.W. Barlow (Ed.), New York, 1988. Die Vernetzung der Thionylphosphazen-Polymere kann auch, wie erwähnt, unter Elektronenbestrahlung mit Bestrahlungsdosen von 1 bis 15 Megarad durchgeführt werden.

Biokompatible oder in biologischen Systemen unter Bildung von harmlosen oder metabolisierbaren Molekülen zerfallende Polymere werden erhalten, wenn $R^1$-$R^5$ Glycerylderivate, Derivate von Zuckern, wie Glucosylderivate, Derivate von Aminosäure- oder Peptidgruppen darstellen. Für den Fall, daß $R^1$-$R^5$ aus Aminosäure- oder Peptidgruppen bestehen, kann die Verknüpfung mit dem Polymer durch die Aminogruppe oder bei hyroxylgruppenhaltigen Aminosäuregruppen, wie Serin- oder Threoningruppen, auch durch die Hydroxylgruppen erfolgen. Geeignete Derivate von Aminosäure- der Peptidgruppen sind beispielsweise Ester, wie Methyl- oder tert.-Butylester von Alanin- oder Leucin-Gruppen. Weitere Beispiele hierzu finden sich in Allcock, Angew. Chem., Int. Ed. Engl. 16 (1977) 147-156. Die auf solche Weise erhaltenen Polymere können in Abhängigkeit von der Art der Substituenten $R^1$ bis $R^5$ wasserunlöslich oder wasserlöslich sein oder Hydrogele bilden.

Anwendungen für diese Polymere finden sich z.B. im medizinischen Bereich, z.B. für Wundnahtmaterial, Gaze, Membranen oder als Trägersubstanzen für bioaktive Wirkstoffe, die bei geeigneter Wahl der Substituenten $R^1$ bis $R^5$ im Anwendungsfall durch den Zerfall des erfindungsgemäßen Polymeren unter physiologischen Bedingungen eine kontrollierte Freisetzung der Wirkstoffe erlauben.

Ein weiterer Gegenstand der Anmeldung ist ein Verfahren zur Herstellung von Thionylphosphazen-Polymeren der zuvor beschriebenen allgemeinen Formel, das dadurch gekennzeichnet ist, daß man ein Cyclothionylchlorphosphazen der Formel

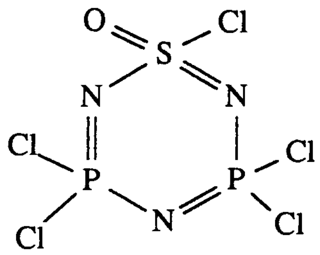

(II)

bei Temperaturen von 100 bis 300 °C in Gegenwart eines inerten organischen Lösungsmittels unter Ringöffnung polymerisiert und das erhaltene Polymere der Formel

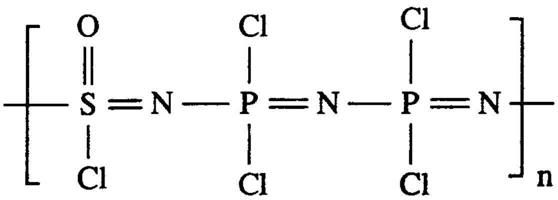

(III)

mit n für ganze Zahlen von 30 bis 10 600, bevorzugt 45 bis 7540,
mit Salzen der Formel

$M(R^1\text{-}R^5)$ (IV),

worin

M vorzugsweise für ein Alkali- oder Erdalkaliion oder für ein Tetraalkylammoniumion steht und
$R^1$ bis $R^5$ für gegebenenfalls substituiertes $C_1$-$C_{18}$-Alkoxy, $C_5$-$C_8$-Cycloalkoxy, $C_6$-$C_{14}$-Aryloxy, $C_7$-$C_{18}$-Alkaryloxy, $C_2$-$C_{18}$-Alkenoxy, $C_8$-$C_{18}$-Alkenylaryloxy oder einen Siloxanrest steht,

in Gegenwart eines inerten organischen Lösungsmittels bei Temperaturen von 20 °C bis 200 °C, bevorzugt 20 bis 150 °C, besonders bevorzugt 20 bis 100 °C, umsetzt.

Bei dem erfindungsgemäßen Verfahren kann die ringöffnende Polymerisation auch ohne Gegenwart eines inerten organischen Lösungsmittels durchgeführt werden. Um unerwünschte Nebenreaktionen bei der Polymerisation zu vermeiden, kann es von Vorteil sein, die Polymerisation in Inertgasatmosphäre, beispielsweise in Gegenwart von Stickstoff und/oder Helium, oder bei vermindertem Druck, beispielsweise bei 0,01 bis 0,1 bar, durchzuführen.

Die ringöffnende Polymerisation der Verbindung (II) wird bei 100 bis 300 °C, bevorzugt bei Temperaturen von 150 bis 250 °C, ganz besonders bevorzugt bei 155 bis 175 °C, durchgeführt. Die Reaktionszeit beträgt etwa 1 Stunde bis 100 Stunden, bevorzugt 2 bis 50 Stunden.

Als inerte organische Lösungsmittel eignen sich besonders Chlorbenzol, Dichlorbenzol und/oder Trichlorbenzol. Die inerten Lösungsmittel werden üblicherweise im Überschuß, d.h. in 5 bis 20-fachem Gewichtsüberschuß, bezogen auf die Verbindung (II) eingesetzt.

Das erhaltene Polymere der Formel (III) kann durch Lösen in geeigneten Lösungsmitteln, wie Benzol, Dioxan und/oder Methylenchlorid, und anschließendem Ausfällen in einem anderen Lösungsmittel, wie Hexan, gereinigt werden.

Durch Umsetzung des erhaltenen Polymeren der Formel (III) bevorzugterweise mit Alkali- und/oder Erdälkalisalzen und/oder Tetraalkylammoniumsalzen der Formel (IV) bevorzugt bei Temperaturen von 20 bis 100 °C werden die erfindungsgemäßen Thionylphosphazen-Polymere erhalten. Bei der Umsetzung wird die Summe der Alkali- und/oder Erdalkalisalze und/oder Tetraalkylammoniumsalze der Formel (IV) in Mengen von 1 bis 10 Mol, bevorzugt 1 bis 5 Mol, bezogen auf jedes umzusetzende Mol Chloratome, eingesetzt.

Bei der Umsetzung des Polymeren der Formel (III) mit den Alkali- und/oder Erdalkali- und/oder Tetraalkylammoniumsalzen der Formel (IV) ist es durch geschickte Reaktionssteuerung, beispielsweise durch einen geringen Überschuß der Salze der Formel (IV) oder durch eine niedrige Reaktionstemperatur, möglich, die entsprechenden Thionyl-Halogenphosphazen-Polymere zu erhalten, da überraschenderweise zunächst nur die Chloratome am Phosphor gegen die Reste $R^2$ bis $R^5$ ausgetauscht werden.

Die erfindungsgemäßen Thionylphosphazen-Polymere können wie zuvor erwähnt zur Herstellung von Thermoplasten oder von Duromeren und Elastomeren durch Vernetzung verwendet werden. Dabei gelingt

die Vernetzung der Thionylphosphazen-Polymerer unter besonders milden Bedingungen, wenn ein Teil der Substituenten $R^1$ bis $R^5$ im Polymeren aus ungesättigten Substituenten besteht. Bevorzugt ist die Verwendung zur Herstellung von Elastomeren.

Den so hergestellten, vernetzten Thionylphosphazen-Polymeren können die bekannten Hilfs- und Zusatzstoffe, wie Ruß, anorganische Füllstoffe, wie Kreide, Bariumsulfat, Aluminiumhydroxid, Magnesiumhydroxid, Kieselsäuren und/oder Tone sowie Pigmente, Weichmacher, Antioxidantien, Öle in den üblichen Mengen zugegeben werden (vgl. Rubber Compounding F.W. Barlow, New York, 1988).

Die erfindungsgemäßen Thionylphosphazen-Polymeren zeichnen sich insbesondere durch exzellente physikalische Eigenschaften aus; sie sind beständig in einem breiten Temperaturbereich, insbesondere bei hohen Temperaturen, und sind bei geeigneter Wahl der Substituenten $R^1$-$R^5$ chemisch außergewöhnlich resistent gegenüber organischen Lösungsmitteln, Säuren und Basen.

Beispiel 1

Herstellung von Cyclothionylchlorphosphazen (analog dem in Z. Naturforschung Bd. 27b, Seite 467 (1972) und Synthesis 369 (1983) beschriebenen Verfahren):

Zu einer gerührten Lösung von Phosphorpentachlorid (65 g) in 300 ml Toluol wurde bei 25 °C 15 g Sulfurylamid $SO_2(NH_2)_2$ hinzugegeben. Die Mischung wurde bei 70 °C 6 Stunden erhitzt, bis das gesamte Sulfurylamid sich aufgelöst hatte. Zu dieser Lösung wurde tropfenweise bei 70 °C innerhalb von 5 Stunden Hexamethyldisilazan (36,1 g) unter Rühren hinzugefügt. Die erhaltene Suspension wurde 2 Stunden gerührt und die flüchtigen Verbindungen wurden unter Vakuum entfernt. Es wurde eine weiße, feste Masse erhalten. Zu dieser Masse wurden 600 ml Chloroform, das 7,6 g Ethanol enthielt, bei 0 °C hinzugegeben und die Mischung weitere 2 Stunden lang gerührt. Nach Beendigung der Reaktion wurde das Gemisch auf Eis (700 g) gegeben und über Nacht stehengelassen. Die organische Schicht wurde abgetrennt, über wasserfreiem Magnesiumsulfat getrocknet und das Lösungsmittel unter Vakuum entfernt. Der erhaltene ölige Rückstand war leicht gelb gefärbt. Der ölige Rückstand wurde mit 250 ml Hexan extrahiert. Nachdem das Lösungsmittel unter vermindertem Druck entfernt worden war, verblieb eine weiße Masse. Durch Reinigung mit Hilfe von Vakuumsublimation (ca $10^{-3}$ Torr) wurde ein weißer, kristalliner Feststoff erhalten, der für die Polymerisation geeignet war.

Beispiel 2

Verfahren zur Herstellung von Polythionylchlorphosphazen:

Cyclothionylchlorphosphazen wurde auf 165 °C 7 Stunden lang unter reduziertem Druck in einem geschlossenen Gefäß erhitzt. Wahrend des Erhitzens wurde das Gefäß ständig geschüttelt. Es war eine merkliche Erhöhung der Viskosität zu beobachten. Das in Methylendichlorid gelöste Polymer wurde durch Einrühren in trockenes Hexan ausgefällt; das ausgefällte Polymer anschließend im Vakuum getrocknet.

Beispiel 3

Polymerisation von Cyclothionylchlorphosphazen in Lösung:

Eine Lösung von Cyclothionylchlorphosphazen in Trichlorbenzol wurde auf 165 °C 8 Stunden lang in einem geschlossenen Gefäß erhitzt. Dabei war ein merklicher Anstieg der Viskosität zu beobachten. Das in Trichlorbenzol gelöste Polymer wurde durch Eingießen in trockenes Hexan ausgefällt, das erhaltene Polymer anschließend im Vakuum getrocknet.

Beispiel 4

Derivatisierung des Polythionylchlorphosphazens:

Zu einer Lösung von Polythionylchlorphosphazen in Methylenchlorid oder Tetrahydrofuran wurde eine Lösung von $NaOCH_2CF_3$ in Dioxan hinzugefügt Die Mischung wurde einige Zeit bei Raumtemperatur in einer Inertgasatmosphäre (Stickstoff) stehengelassen. Das genannte Alkalisalz wurde in stöchiometrischem Überschuß dem Thionylchlorphosphazen-Polymer hinzugegeben. Überschüssiges Salz wurde nach der Reinigung abfiltriert und das erhaltene Polymer wurde durch Eingießen der Reaktionsmischung in Wasser

oder Hexan ausgefällt und anschließend im Vakuum getrocknet. Es wurde ein Homopolymer mit $OCH_2CF_3$-Gruppierungen erhalten, das einen $T_G$-Wert von -60 ° C besaß.

Beispiel 5

Derivatisierung von Polythionylchlorphosphazen:

Zu einer Lösung von Polythionylchlorphosphazen in Methylenchlorid und Tetrahydrofuran wurde eine Mischung von $NaOCH_2CF_3$ und $NaOCH_2CH=CH_2$ in Dioxan gegeben, wobei das Mengenverhältnis der beiden Alkalisalze 1,0:0,03 betrug. Die Mischung wurde einige Zeit bei Raumtemperatur oder leicht erhöhter Temperatur in einer Inertgasatmosphäre, Stickstoff, stehengelassen. Das Alkalisalz war in einem stöchiometrischen Überschuß zugegeben worden und das überschüssige Salz wurde durch Extraktion der flüssigen Phase mit Wasser/Aceton entfernt. Durch Eingießen der Reaktionsmischung in Wasser oder Hexan wurde das derivatisierte Polymer erhalten. Es war ein Copolymer mit folgenden Gruppierungen:

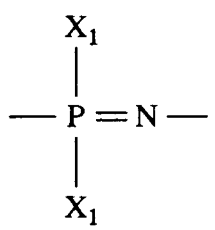 , 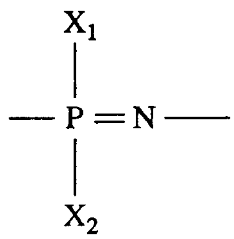 , 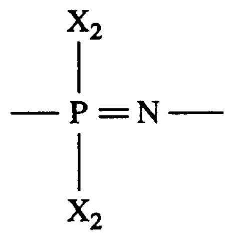 ,

worin
$X_1$ für $OCH_2CF_3$ und
$X_2$ für $OCH_2CH=CH_2$ steht.
Der $T_G$-Wert betrug -62 ° C.

Beispiel 6

Derivatisierung von Polythionylchlorphosphazen:

Eine Lösung von Polythionylchlorphosphazen in Benzol oder Tetrahydrofuran wurde zu einer Lösung aus überschüssigem Natriumphenolat in Dioxan bei Raumtemperatur gegeben. Nach 2 Stunden wurde das Reaktionsgemisch in Wasser oder Hexan geschüttet. Das ausfallende Polymer war farblos und besaß eine Glasübergangstemperatur ($T_G$) von + 10 ° C.

Das Polymer wurde in einem Dioxan-Wasser-Gemisch (95:5 Gew.-Tle) gelöst. Nach 7 Tagen konnte keine Zersetzung des Polymeren nachgewiesen werden.

**Patentansprüche**

1. Thionylphosphazen-Polymere mit einem mittleren Molekulargewicht $M_n$ von 10.000 bis 3.500.000 (g/Mol) und wiederkehrende Struktureinheiten der Formel

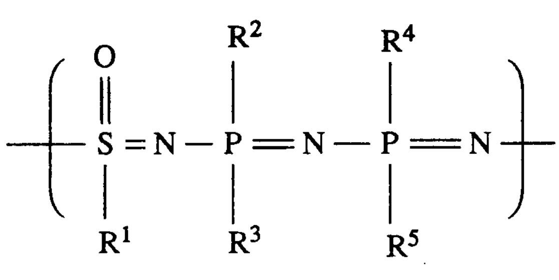 (I),

worin
$R^1$ für Halogen, Pseudohalogen, gegebenenfalls substituiertes $C_1$-$C_{18}$-Alkoxy, $C_5$-$C_8$-Cycl-

oalkoxy, $C_6$-$C_{14}$-Aryloxy, $C_7$-$C_{18}$-Alkaryloxy, $C_2$-$C_{18}$-Alkenoxy, $C_8$-$C_{18}$-Alkenylaryloxy oder einen Siloxanrest steht,

$R^2$ bis $R^5$ gleich oder verschieden sind und gegebenenfalls substituiertes $C_1$-$C_{18}$-Alkoxy, $C_5$-$C_8$-Cycloalkoxy, $C_6$-$C_{14}$-Aryloxy, $C_7$-$C_{18}$-Alkaryloxy, $C_2$-$C_{18}$-Alkenoxy, $C_8$-$C_{18}$-Alkenylaryloxy oder Siloxan bedeuten,

wobei der Anteil an ungesättigten Substituenten $R^1$ bis $R^5$ bis zu 10 %, bezogen auf die Gesamtzahl an Substituenten $R^1$ bis $R^5$, beträgt.

**2.** Verfahren zur Herstellung von Thionylphosphazen-Polymeren nach Anspruch 1, dadurch gekennzeichnet, daß man Cyclothionylchlorphosphazen der Formel

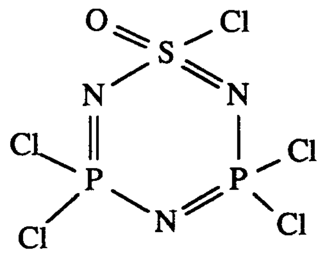

(II)

bei Temperaturen von 100 bis 300 °C in Gegenwart eines inerten organischen Lösungsmittels unter Ringöffnung polymerisiert und das erhaltene Polymere der Formel

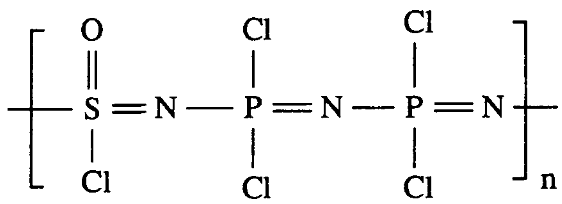

(III)

mit n für ganze Zahlen von30 bis 10 600
mit Salzen der Formel

$M(R^1$-$R^5)$ (IV),

worin

M für ein Alkali- oder Erdalkaliion oder ein Tetraalkylammoniumion steht und

$R^1$ bis $R^5$ für gegebenenfalls substituiertes $C_1$-$C_{18}$-Alkoxy, $C_5$-$C_8$-Cycloalkoxy, $C_6$-$C_{14}$-Aryloxy, $C_7$-$C_{18}$-Alkaryloxy, $C_2$-$C_{18}$-Alkenoxy, $C_8$-C-$_{18}$Alkenylaryloxy oder einen Siloxanrest steht,

in Gegenwart eines inerten organischen Lösungsmittels bei Temperaturen von 20 °C bis 200 °C umsetzt.

**3.** Verwendung des Thionylphosphazen-Polymeren nach Anspruch 1 zur Herstellung von Thermoplasten oder Elastomeren und Duromeren durch Vernetzung.